# EUROPÄISCHE PATENTSCHRIFT

(11) **EP 0 457 751 B1**
(45) Veröffentlichungstag und Bekanntmachung des Hinweises auf die Patenterteilung: **27.07.1994**
(21) Anmeldenummer: 91890095.2
(22) Anmeldetag: 06.05.1991
(51) Int. Cl.: C03B 33/033

(54) **Verfahren und Vorrichtung zum Brechen von Glasscheiben**
Method and apparatus for breaking sheets of glass
Procédé et appareil pour rompre des feuilles de verre

(30) Priorität: 15.05.1990 AT 1079/90
(43) Veröffentlichungstag der Anmeldung: 21.11.1991
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- US-A- 1 792 653
- US-A- 1 920 641
- US-A- 3 567 086
- US-A- 4 072 259

## Beschreibung

Die Erfindung betrifft ein Verfahren zum Brechen von Glasscheiben entlang einer in der Glasscheibe erzeugten Ritzlinie, bei dem die Glasscheibe entlang der Ritzlinie gewölbt wird, indem die Glasscheibe im Bereich der Ritzlinie gehoben und beidseits der Ritzlinie niedergehalten wird, wobei die Ritzlinie auf der konvexen Seite der so in der Glasscheibe erzeugten Wölbung liegt.

Derartige Verfahren sind aus der DE-OS 29 25 981, der DE-OS 34 28 863, der EP-A-340 199 und den US-PSen 3 253 756, 3 372 847, 3 570 734, 3 668 955 und 3 693 852 bekannt.

Bei allen bekannten Arbeitsweisen und Vorrichtungen zum Brechen von geritzten Glastafeln wird die Hebeleiste oder Heberolle so angehoben, daß sie die Glasscheibe im Bereich der Ritzung gleichmäßig und gleichzeitig anhebt. Dadurch sind nicht nur insbesondere beim Brechen dickerer Glasscheiben erhebliche Kräfte notwendig, sondern auch das Niederhalten der Glasscheiben beidseits der Hebeleiste oder -rolle erfordert einen beträchtlichen Kraftaufwand. Schließlich hat sich gezeigt, daß durch die bekannten Arbeitsweisen und Vorrichtungen nicht immer saubere Bruchkanten erzielt werden.

Aus der DE-PS 801 215 ist eine Vorrichtung zum Abtrennen von Randstreifen von Glasscheiben bekannt. In dieser bekannten Vorrichtung werden die Glasscheiben über einen als Rolle ausgebildeten und über den die Glasscheiben tragenden Tisch vorstehenden Stützkörper bewegt. Die Wölbung der Glasscheiben entsteht ausschließlich durch das Gewicht der Glasscheiben, durch das diese auf beiden Seiten des Stützkörpers nach unten, d.h. auf den Tisch zu gebogen werden.

In der DE-OS 19 57 601 wird eine Vorrichtung zum Teilen von Glasscheiben beschrieben, bei der unter der Glasscheibe eine anhebbare Hebeleiste, die auch als Walze ausgebildet sein kann, vorgesehen ist. Die Hebeleiste ist einseitig anhebbar, wobei an der Glasscheibe im Bereich des anhebbaren Endes der Hebeleiste von oben her zwei Niederhaltefinger angreifen, die zusammen mit der Hebeleiste hebbar sind und die Glasscheibe wölben.

Der Erfindung liegt die Aufgabe zugrunde, ein Verfahren der eingangs genannten Gattung anzugeben, mit dem Glasscheiben auch entlang längerer Schnitte, insbesondere sogenannter Traveren (über die gesamte Glasbreite durchgehende Ritzlinien) problemlos gebrochen werden können.

Erfindungsgemäß wird dies dadurch erreicht, daß das Wölben der Glasscheibe quer zur Ritzlinie und entlang dieser Ritzlinie fortschreitend erfolgt und daß man die Glasscheibe im Bereich beiderseits der Ritzlinie durch Anlegen von Unterdruck an die Unterseite der Glasscheibe niederhält.

Bei der erfindungsgemäßen Arbeitsweise wird die Glasscheibe zunächst an einem Rand angehoben und dann das Anheben nach und nach fortgesetzt, bis die Glastafel im Bereich der ganzen Ritzlinie angehoben ist. Durch das einseitig beginnende Anheben ist es viel einfacher und rascher möglich, den Brechvorgang einzuleiten, so daß weniger Kraftaufwand notwendig ist und sauberere Brechlinien als bisher erreicht werden. Da bei der erfindungsgemäßen Arbeitsweise die Glasscheibe im Bereich beiderseits der Hebeleiste oder -rolle durch Anlegen von Unterdruck niedergehalten wird, sind von oben her auf die Glasscheibe einwirkende Niederhalter entbehrlich. Dabei bietet sich erfindungsgemäß die Möglichkeit an, den Unterdruck in diskreten Bereichen beispielsweise mit Hilfe von Saugnäpfen anzulegen, oder man legt Unterdruck in beidseites der Ritzlinie durchgehenden Bereichen an.

Für gewöhnlich wird beim erfindungsgemäßen Verfahren so gearbeitet werden, daß man die Glasscheibe zwar an einem Rand anzuheben beginnt, daß aber die Glasscheibe am Ende des Anhebens über die gesamte Länge der Ritzlinie gleichmäßig weit über die Auflagefläche angehoben ist.

Eine Vorrichtung zum Durchführen des erfindungsgemäßen Verfahrens mit einem Tisch und einer in einem Spalt im Tisch angeordneten, über die Auflagefläche des Tisches anhebbaren Hebeleiste oder -rolle, wobei der Tisch vorzugsweise als Luftkissentisch oder als Tisch mit Förderbändern zum Transport der Glasscheibe ausgebildet ist, ist in einer Ausführungsform der Erfindung dadurch gekennzeichnet, daß die Hebeleiste oder -rolle mit ihrer Hebeeinrichtung in einer durch die Ritzlinie gehenden Vertikalebene schrägstellbar verbunden ist und daß die Hebeeinrichtung mit einem Antrieb ausgestattet ist, der an einem Ende der Hebeleiste oder -rolle früher tätig wird als der Hebeantrieb am anderen Ende der Hebeleiste oder -rolle, wobei die Hebeantriebe den gleichen Hub besitzen, und daß beiderseits der Hebeleiste oder -rolle in der Auflagefläche des Tisches Unterdruckeinrichtungen zum Niederhalten der Glasscheibe vorgesehen sind.

Eine andere Ausführungsform einer erfindungsgemäßen Vorrichtung zum Durchführen des Verfahrens mit einem Tisch und einer in einem Spalt im Tisch angeordneten, über die Auflagefläche des Tisches anhebbaren Hebeleiste oder -rolle, wobei der Tisch vorzugsweise als Luftkissentisch oder als Tisch mit Förderbändern zum Transport der Glasscheibe ausgebildet ist, ist dadurch gekennzeichnet, daß der an der Glasscheibe angreifende Rand der Hebeleiste oder die Achse der Heberolle zur Auflagefläche des Tisches schräg ausgerichtet ist, und daß beiderseits der Hebeleiste oder -rolle in der Auflagefläche des Tisches Unterdruckeinrichtungen zum Niederhalten der Glasscheibe vorgesehen sind.

In der erstgenannten Ausführungsform ist die Hebeleiste oder -rolle in ihrer Ruhestellung, in der sie unterhalb der Auflagefläche des Tisches angeordnet ist, zur Auflagefläche im wesentlichen parallel ausgerichtet und wird von dem Hebeantrieb zunächst einseitig angehoben und dann, gegebenenfalls auch schon bevor das eine Ende seine obere Endstellung erreicht hat, auch auf der anderen Seite angehoben.

Bei der anderen Ausführungsform der erfindungsgemäßen Vorrichtung ist die wirksame Kante der Hebeleiste zur Auflagefläche des Tisches schräg gestellt, so daß die Hebeleiste mit der Glasscheibe zunächst an einer Seite in Eingriff kommt und diese zunächst einseitig anhebt. Sinngemäßes gilt für die Ausführungsform mit einer Heberolle, deren Achse zur Auflagefläche des Tisches schräg gestellt ist.

Bei beiden Ausführungsformen kann die Hebeleiste bzw. die Heberolle durch einen herkömmlichen Antrieb angehoben werden. Es besteht natürlich auch die Möglichkeit, die den beiden Enden der Hebeleiste oder Heberolle zugeordneten Hebeantriebe voneinander unabhängig auszubilden, so daß die Hebeleiste oder -rolle, wenn die Hebeleiste oder -rolle schließlich ihre obere Endstellung erreicht hat, mit ihrer wirksamen Kante bzw. ihrer Achse parallel zur Auflagefläche ausgerichtet ist.

Das Niederhalten der Glasscheibe beim Brechen derselben nach dem erfindungsgemäßen Verfahren erfolgt vorzugsweise mit Hilfe von Unterdruck, der von unten gegen die Glasscheibe angelegt wird, da so am einfachsten das unterschiedliche Anheben der Glasscheibe (das Anheben schreitet vom einen Ende der Ritzlinie zum anderen hin fort) berücksichtigt werden kann. In der Praxis bestehen hiefür verschiedene Möglichkeiten, wobei eine dadurch gekennzeichnet ist, daß im Bereich beiderseits der Hebeleiste oder -rolle in der Auflagefläche an eine Unterdruckquelle anschließbare Bohrungen die zur Oberseite des Tisches hin durchgehen, vorgesehen sind. Die andere Alternative ist dadurch gekennzeichnet, daß auf beiden Seiten der Hebeleiste oder -rolle je wenigstens zwei Saugköpfe mit in ihrer Ausgangsstellung in bzw. unter der Auflagefläche des Tisches liegenden Rändern vorgesehen sind.

Vorteilhafte weitere Ausgestaltungen des erfindungsgemäßen Verfahrens und der erfindungsgemäßen Vorrichtung sind Gegenstand der übrigen Unteransprüche.

Weitere Merkmale und Einzelheiten der Erfindung ergeben sich aus der nachstehenden Beschreibung, in der auf die angeschlossene Zeichnung Bezug genommen wird. Es zeigt:
Fig. 1 eine Vorrichtung zum Brechen im Querschnitt,
Fig. 2 die Vorrichtung aus Fig. 1 im Schnitt entlang der Linie II-II von Fig. 1 und
Fig. 3 eine abgeänderte Ausführungsform im Schnitt entsprechend Fig. 2.

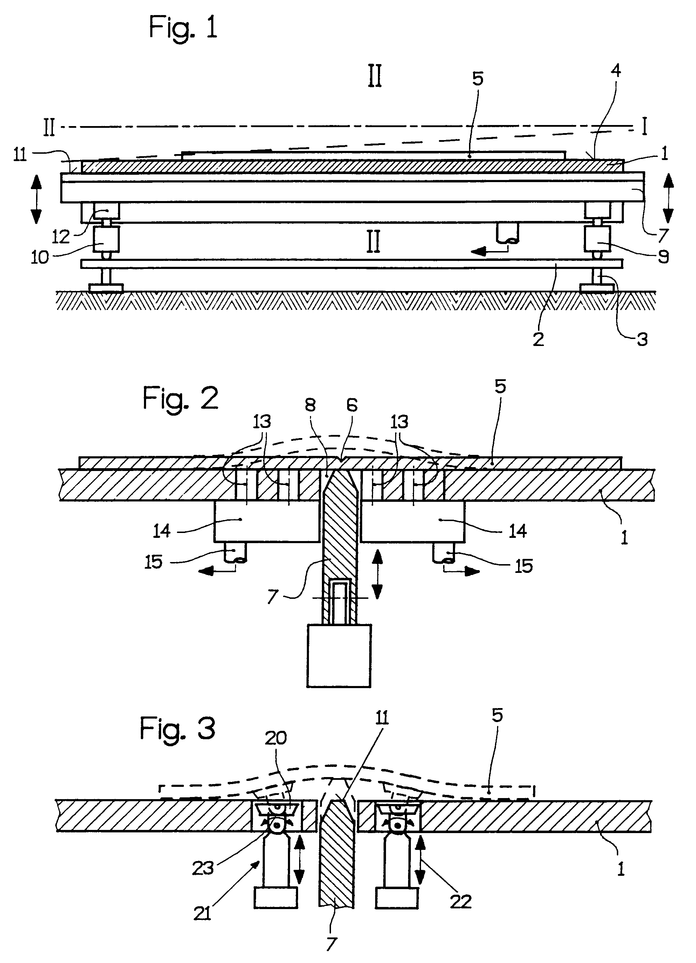

Der in Fig. 1 gezeigte Tisch 1 besitzt ein Gestell 2 und steht über Füße 3 am Boden auf. Die Auflagefläche 4 des Tisches 1 dient dazu, eine zu zerteilende Glasscheibe 5 abzustützen. Hiezu kann der Tisch 1, wie an sich bekannt und beispielsweise aus den in der Beschreibungseinleitung genannten Schriften bekannt, ausgebildet sein.

In einem Spalt 8 im Tisch 1 ist heb- und senkbar eine Hebeleiste 7 vorgesehen (statt der Hebeleiste 7 kann auch eine Hebewalze, die ggf. drehbar bzw. drehangetrieben ist, vorgesehen sein, dies insbesondere, wenn der Brechvorgang dynamisch ausgeführt werden soll, vgl. EP-A-0 340 199).

Eine Glasscheibe 5 wird so herangefördert, daß eine auf ihrer Oberseite vorgesehene Ritzlinie 6 (in Fig. 2 vergrößert dargestellt) über der Hebeleiste 7 zu liegen kommt. Zur Ausführung des Brechvorganges wird die Hebeleiste 7 von ihren Hebezylindern 9 und 10 zunächst so angehoben, daß der in Fig. 1 rechts liegende Zylinder 9 die Hebeleiste 7 anhebt, bis ihre obere Kante 11 die in Fig. 1 strichliert eingezeichnete und mit I bezeichnete Stellung einnimmt. Dadurch wird die Glasscheibe 5 einseitig angehoben und der Brechvorgang eingeleitet. Noch während sich die Hebeleiste 7 unter der Wirkung des Hebezylinders 9 nach oben bewegt oder auch nach Beendigung des Anhebens der Hebeleiste 7 durch den Hebezylinder 9 wird der Hebezylinder 10 in Betrieb genommen und hebt die Hebeleiste 7 schließlich an, bis sie die in Fig. 1 strichpunktiert eingezeichnete obere Endlage II einnimmt.

Hiezu ist die Hebeleiste 7, wie in Fig. 1 schematisch angedeutet, mit den Hebezylindern 9 und 10 gelenkig bei 12 verbunden.

Um die Glasscheibe 5 während des Brechvorganges niederzuhalten, sind in der in Fig. 2 gezeigten Ausführungsform beidseitig des Spaltes 8 für die Hebeleiste 7 im Tisch 1 Bohrungen 13 vorgesehen, an die über einen Saugkasten 14 und eine Leitung 15 Unterdruck angelegt werden kann.

Alternativ zu den mit Unterdruck beaufschlagbaren Bohrungen 13 können im Tisch 1, wie in Fig. 3 gezeigt, mehrere mit Unterdruck beaufschlagbare Saugköpfe 20 vorgesehen sein, die mit ihren Hebevorrichtungen 21 gelenkig verbunden sind, so daß sie nicht nur in Richtung der Pfeile 22 anhebbar, sondern auch um eine parallel zur Hebeleiste 7 ausgerichtete Achse in Richtung des Doppelpfeiles 23 verschwenkbar sind. Dadurch können sich die Saugköpfe 20, wie dies in Fig. 3 strichliert bzw. punktiert angedeutet ist, während des Brechvorganges schräg stellen und haften so sicher an der Unterseite der Glasscheibe 5 an, so daß diese mit der entsprechenden Kraft nach unten gezogen wird.

In einer nicht gezeigten Ausführungsform kann alternativ zu der in Fig. 1 gezeigten Ausführungsform die Hebeleiste 7 eine zur Auflagefläche 4 des Tisches 1 schräg gestellte Wirkkante (oberer Rand 11 der Hebeleiste 7) haben, so daß diese nur parallel zu sich selbst angehoben werden braucht, um mit dem Anheben der Glasscheibe 5 im Bereich der Ritzlinie 6 an einem Ende derselben zu beginnen.

Falls gewünscht, kann die Hebeleiste mit schräg zur Auflagefläche 4 ausgebildeter Oberkante an der weiter unten liegenden Seite der Oberkante zusätzlich angehoben werden, so daß die Oberkante am Ende des Brechvorganges wieder parallel zum Tisch 1 ausgerichtet ist. Sinngemäßes gilt für eine Hebewalze, deren Drehachse schräg zur Oberfläche 4 des Tisches 1 ausgerichtet sein kann.

## Patentansprüche

1. Verfahren zum Brechen von Glasscheiben (5) entlang einer in der Glasscheibe (5) erzeugten Ritzlinie (6), bei dem die Glasscheibe (5) entlang der Ritzlinie (6) gewölbt wird, indem die Glasscheibe (5) im Bereich der Ritzlinie (6) gehoben und beidseits der Ritzlinie (6) niedergehalten wird, wobei die Ritzlinie (6) auf der konvexen Seite der so in der Glasscheibe (5) erzeugten Wölbung liegt, dadurch gekennzeichnet, daß das Wölben der Glasscheibe (5) quer zur Ritzlinie (6) und entlang dieser Ritzlinie fortschreitend erfolgt und daß man die Glasscheibe (5) im Bereich beiderseits der Ritzlinie (6) durch Anlegen von Unterdruck (13, 20) an die Unterseite der Glasscheibe (5) niederhält.

2. Verfahren nach Anspruch 1, dadurch gekennzeichnet, daß man Unterdruck in diskreten Bereichen beispielsweise mit Hilfe von Saugnäpfen (20) anlegt.

3. Verfahren nach Anspruch 1, dadurch gekennzeichnet, daß man Unterdruck in beidseits der Ritzlinie (6) durchgehenden Bereichen (13) anlegt.

4. Verfahren nach einem der Ansprüche 1 bis 3, dadurch gekennzeichnet, daß die Glasscheibe (5) am Ende des Anhebens im Bereich der Ritzlinie (6) gleichmäßig hoch angehoben ist.

5. Vorrichtung zum Durchführen des Verfahrens nach einem der Ansprüche 1 bis 4, mit einem Tisch (1) und einer in einem Spalt (8) im Tisch (1) angeordneten, über die Auflagefläche (4) des Tisches (1) anhebbaren Hebeleiste (7) oder -rolle, wobei der Tisch (1) vorzugsweise als Luftkissentisch oder als Tisch (1) mit Förderbändern zum Transport der Glasscheibe (5) ausgebildet ist, dadurch gekennzeichnet, daß die Hebeleiste (7) oder -rolle mit ihrer Hebeeinrichtung (9, 10) in einer durch die Ritzlinie (6) gehenden Vertikalebene schrägstellbar verbunden ist und daß die Hebeeinrichtung (9, 10) mit einem Antrieb ausgestattet ist, der an einem Ende der Hebeleiste (7) oder -rolle früher tätig wird als der Hebeantrieb am anderen Ende der Hebeleiste (7) oder -rolle, wobei die Hebeantriebe (9, 10) den gleichen Hub besitzen, und daß beiderseits der Hebeleiste (7) oder -rolle in der Auflagefläche (4) des Tisches (1) Unterdruckeinrichtungen zum Niederhalten der Glasscheibe (5) vorgesehen sind.

6. Vorrichtung nach Anspruch 5, dadurch gekennzeichnet, daß die Hebeantriebe (9, 10) an den Enden der Hebeleiste (7) oder -rolle diese zueinander zeitlich versetzt bis in die gleiche Höhenlage über der Auflagefläche (4) anheben.

7. Vorrichtung zum Durchführen des Verfahrens nach einem der Ansprüche 1 bis 4 mit einem Tisch (1) und einer in einem Spalt (8) im Tisch (1) angeordneten, über die Auflagefläche (4) des Tisches (1) anhebbaren Hebeleiste (7) oder -rolle, wobei der Tisch (1) vorzugsweise als Luftkissentisch oder als Tisch (1) mit Förderbändern zum Transport der Glasscheibe (5) ausgebildet ist, dadurch gekennzeichnet, daß der an der Glasscheibe (5) angreifende Rand der Hebeleiste (7) oder die Achse der Heberolle zur Auflagefläche (4) des Tisches (1) schräg ausgerichtet ist, und daß beiderseits der Hebeleiste (7) oder -rolle in der Auflagefläche (4) des Tisches (1) Unterdruckeinrichtungen zum Niederhalten der Glasscheibe (5) vorgesehen sind.

8. Vorrichtung nach einem der Ansprüche 5 bis 7, dadurch gekennzeichnet, daß im Bereich beiderseits der Hebeleiste (7) oder -rolle in der Auflagefläche (4) an eine Unterdruckquelle angeschlossene Bohrungen (13), die zur Oberseite des Tisches (1) hin durchgehen, vorgesehen sind.

9. Vorrichtung nach Anspruch 8, dadurch gekennzeichnet, daß die Bohrungen (13) an ihrer Unterseite in einen Saugkasten (14) münden.

10. Vorrichtung nach einem der Ansprüche 5 bis 7, dadurch gekennzeichnet, daß auf beiden Seiten der Hebeleiste (7) oder -rolle je wenigstens zwei Saugköpfe (20) mit in ihrer Ausgangsstellung in bzw. unter der Auflagefläche (4) des Tisches (1) liegenden Rändern vorgesehen sind.

11. Vorrichtung nach Anspruch 10, dadurch gekennzeichnet, daß die Saugköpfe (20) begrenzt anhebbar ausgeführt sind.

12. Vorrichtung nach Anspruch 10 oder 11, dadurch gekennzeichnet, daß die Saugköpfe (20) gegenüber ihren Halterungen bzw. Hebeeinrichtungen (21) schrägstellbar sind.

## Claims

1. A method of breaking glass sheets (5) along a score line (6) made in the glass sheet (5), in which the glass sheet (5) is bowed along the score line (6), in that the glass sheet (5) is raised in the region of the score line (6) and is held down on both sides of the score line (6), wherein the score line (6) lies on the convex side of the bowing thus created in the glass sheet (5), characterized in that the bowing of the glass sheet (5) is effected transverse to the score line (6) and progressively along this score line, and in that the glass sheet (5) is held down in the region on each side of the score line (6) by the application of suction (13, 20) to the underside of the glass sheet (5).

2. A method according to claim 7, characterized in that suction is applied in discrete regions, with the aid of suction cups (20) for example.

3. A method according to claim 1, characterized in that suction is applied in continuous regions (13) on both sides of the score line (6).

4. A method according to any of claims 1 to 3, characterized in that the glass sheet (5) is, at the end of the raising, raised to a uniform height in the region of the score line (6).

5. Apparatus for carrying out the method according to any of claims 1 to 4, with a table (1) and a lifting strip (7) or roller arranged in a gap (8) in the table (1) and adapted to be raised above the bearing surface (4) of the table (1), wherein the table (1) is preferably formed as an air cushion table or as a table (1) with conveyor belts for transporting the glass sheet (5), characterized in that the lifting strip (7) or roller is connected to its raising device (9, 10) so as to be capable of adjusting its inclination in a vertical plane passing through the score line (6), and in that the lifting device (9, 10) is fitted with a driver which is operative at one end of the lifting strip (7) or roller earlier than the lifting driver at the other end of the lifting strip (7) or roller, the lifting drivers (9, 10) having the same stroke, and in that suction devices are provided on both sides of the lifting strip (7) or roller in the bearing surface (4) of the table (1), for holding down the glass sheet (5).

6. Apparatus according to claim 5, characterized in that the lifting drivers (9, 10) at the ends of the lifting strip (7) or roller raise this to same height above the bearing surface (4) but with a relative time offset.

7. Apparatus for carrying out the method according to any of claims 1 to 4, with a table (1) and a lifting strip (7) or roller arranged in a gap (8) in the table (1) and adapted to be raised above the bearing surface (4) of the table (1), wherein the table (1) is preferably formed as an air cushion table or as a table (1) with conveyor belts for transporting the glass sheet (5), characterized in that the edge of the lifting strip (7) engaging the glass sheet (5) or the axis of the lifting roller is inclined at an angle to the bearing surface (4) of the table (1) and in that suction devices are provided in the bearing surface (4) of the table (1) on both sides of the lifting strip (7) or roller, for holding down the glass sheet (5).

8. Apparatus according to any of claims 5 to 7, characterized in that in the bearing surface (4) bores (13) connected to a suction source are provided in the region on each side of the lifting strip (7) or roller and pass through to the upper side of the table (1).

9. Apparatus according to claim 8, characterized in that the bores (13) open at their lower ends into a suction box (14).

10. Apparatus according to any of claims 5 to 7, characterized in that at least two suction heads (20) are provided on each side of the lifting strip (7) or roller, with edges which lie in or below the bearing surface (4) of the table (1) in their initial position.

11. Apparatus according to claim 10, characterized in that the suction heads (20) are designed to be capable of lifting within limits.

12. Apparatus according to claim 10 or 11, characterized in that the suction heads (20) can adjust angularly relative to their holders or lifting devices (21).

## Revendications

1. Procédé pour rompre des feuilles de verre (5) le long d'une ligne de rayure (6) pratiquée dans la feuille de verre (5), suivant lequel la feuille de verre (5) est bombée le long de la ligne de rayure (6) par le fait que la feuille de verre (5) est soulevée dans la zone de la ligne de rayure (6) et est maintenue abaissée de part et d'autre de la ligne de rayure (6), la ligne de rayure (6) étant située sur le côté convexe du bombement ainsi produit dans le feuille de verre (5), caractérisé par le fait que le bombement de la feuille de verre (5) est effectué transversalement à la ligne de rayure (6) et de façon progressive le long de cette ligne de rayure et que la feuille de verre (5) est maintenue abaissée dans la zone située de part et d'autre de la ligne de rayure (6) par application de dépression (13, 20) sur le côté inférieur de la feuille de verre (5).

2. Procédé suivant la revendication 1, caractérisé par le fait que la dépression est appliquée dans des zones discrètes, par exemple à l'aide de ventouse (20).

3. Procédé suivant la revendication 1, caractérisé par le fait que la dépression est appliquée dans des zones (13) continues de part et d'autre de la ligne de rayure (6).

4. Procédé suivant l'une des revendications 1 à 3, caractérisé par le fait qu'à la fin du soulèvement la feuille de verre (5) est soulevée uniformément dans la zone de la ligne de rayure (6).

5. Dispositif pour la mise en oeuvre du procédé suivant l'une des revendications 1 à 4, comprenant une table (1), et un rouleau ou lame (7) de soulèvement disposé(e) dans une fente (8) de la table (1) et pouvant être soulevé(e) au-dessus de la surface d'appui (4) de la table (1), la table (1) étant réalisée de préférence sous la forme d'une table à coussin d'air ou d'une table (1) avec des bandes de transport pour la feuille de verre (5), caractérisé par le fait que le rouleau ou la lame (7) de soulèvement est relié(e) à son dispositif de soulèvement (9, 10) de manière à pouvoir être inclinée dans un plan vertical passant par la ligne de rayure (6) et que le dispositif de soulèvement (9, 10) est équipé d'une commande qui, à une extrémité du rouleau ou de la lame (7) de soulèvement, entre en action plus tôt que la commande de soulèvement à l'autre extrémité du rouleau ou de la lame (7) de soulèvement, les commandes de soulèvement (9, 10) ayant la même course, et que des dispositifs à dépression sont prévus de part et d'autre du rouleau ou de la lame (7) de soulèvement, dans le plan d'appui (4) de la table (1), pour maintenir abaissée la feuille de verre (5).

6. Dispositif suivant la revendication 5, caractérisé par le fait que les commandes de soulèvement (9, 10) aux extrémités du rouleau ou de la lame (7) de soulèvement soulèvent ces extrémités avec un décalage dans le temps jusqu'à la même hauteur au-dessus de la surface d'appui (4).

7. Dispositif pour la mise en oeuvre du procédé suivant l'une des revendications 1 à 4, comprenant un table (1) et un rouleau ou une lame (7) de soulèvement disposé(e) dans une fente (8) de la table (1) et pouvant être soulevé(e) au-dessus de la surface d'appui (4) de la table (1), la table (1) étant de préférence réalisée sous la forme d'une table à coussin d'air ou d'une table (1) avec bandes de transport pour la feuille de verre (5), caractérisé par le fait que l'axe du rouleau de soulèvement ou le bord de la lame de soulèvement (7) agissant sur la feuille de verre (5) est orienté(e) de façon oblique par rapport à la surface d'appui (4) de la table (1) et que des dispositifs à dépression sont prévus de part et d'autre du rouleau ou de la lame (7) de soulèvement, dans la surface d'appui (4) de la table (1), pour maintenir abaissée la feuille de verre (5).

8. Dispositif suivant l'une des revendications 5 à 7, caractérisé par le fait que la surface d'appui (4) comporte, dans la zone située de part et d'autre du rouleau ou de la lame (7) de soulèvement, des trous (13) reliés à une source de dépression et s'étendant jusqu'à la face supérieure de la table (1).

9. Dispositif suivant la revendication 8, caractérisé par le fait que les trous (13) débouchent, sur leur côté inférieur, dans un caisson à dépression (14).

10. Dispositif suivant l'une des revendications 5 à 7, caractérisé par le fait qu'au moins deux ventouses (20) dont les bords, dans la position de départ, sont situés dans ou en dessous de la surface d'appui (4) de la table (1), sont prévues de part et d'autre du rouleau ou de la lame (7) de soulèvement.

11. Dispositif suivant la revendication 10, caractérisé par le fait que les ventouses (20) sont réalisées de manière à pouvoir être soulevées de façon limitée.

12. Dispositif suivant la revendication 10 ou 11, caractérisé par le fait que les ventouses (20) peuvent être inclinées par rapport à leurs supports ou dispositifs de soulèvement (21).
